# FASCICULE DE BREVET EUROPEEN

(11) **EP 2 894 356 B1**
(45) Date de publication et mention de la délivrance du brevet: **28.12.2016**
(21) Numéro de dépôt: 15150896.7
(22) Date de dépôt: 13.01.2015
(51) Int. Cl.: F16B 19/10, B21J 15/04, B21J 15/12, B25B 27/00

(54) **Rivet pour fixation aveugle, outil de pose associé et méthode de pose d'un tel rivet**
Niete zur Blindbefestigung, entsprechendes Werkzeug und Methode zum Anbringen einer solchen Niete
Rivet for blind fastening, associated setting tool and method for setting such a rivet

(30) Priorité: 14.01.2014 FR 1450281
(43) Date de publication de la demande: 15.07.2015
(73) Titulaire: Lisi Aerospace, 75012 Paris (FR)
(72) Inventeur: Bigot, Frédéric, 36260 REUILLY (FR); Gay, Olivier, 95450 COMMENY (FR); Pailhories, Guy, 12200 VILLEFRANCE DE ROUERGUE (FR)
(74) Mandataire: Ipside

(56) Documents cités:
- EP-A1- 1 882 860
- US-A- 3 236 143
- US-A- 3 728 882
- US-A1- 2011 131 776

## Description

La présente invention concerne les fixations aveugles, c'est-à-dire les fixations installées au travers de structures à assembler par un seul côté de l'assemblage appelé communément côté « accessible ». Ces fixations sont utilisées par exemple dans l'assemblage de structures d'un aéronef.

En particulier, la présente invention concerne un rivet pour fixation aveugle, du type comprenant une vis comportant un élément de préhension, une gorge de rupture conçue pour tenir sous une contrainte de tension et casser sous une contrainte en torsion, une tête séparée de l'élément de préhension par la gorge de rupture, un fût lisse et une partie filetée, ainsi qu'une douille comportant une collerette apte à recevoir la tête de la vis et un fût tubulaire comprenant un taraudage destiné à venir en prise avec la partie filetée de la vis. Ce type de rivet est connu par exemple des documents EP 1 635 994 et US 3,236,143. L'invention concerne également un nez de pose pour installer de tels rivets. Un nez de pose est connu par exemple du document US 3,728,882 A.

Pour augmenter la cadence de fabrication des aéronefs et réduire les coûts d'assemblage, les constructeurs cherchent à automatiser l'assemblage au moyen de robots pourvus de nez de pose. A la différence d'un opérateur humain qui peut saisir un rivet de forme complexe et l'introduire sans difficultés dans un alésage, un robot ne peut installer correctement une fixation que si, avant l'introduction du rivet dans la structure, les axes du nez de pose et du rivet sont strictement coaxiaux. Les rivets pour fixations aveugles et les nez de pose connus ne permettent pas d'obtenir une telle coaxialité. Lorsque les rivets sont insérés dans le nez de pose, les extrémités des rivets présentent un débattement angulaire important avec l'axe du nez de pose. Ainsi, quand le robot essaie d'introduire le rivet dans un perçage en face duquel il s'est positionné, l'extrémité du rivet bute contre la structure et ne peut être introduit dans le perçage.

L'invention a pour but de résoudre les inconvénients des rivets de l'art antérieur, et notamment de fournir un rivet aveugle et un outillage de pose qui permette une robotisation de pose robuste.

Pour cela, le rivet selon l'invention est du type précité, tel que l'élément de préhension de la vis comprend une première portion de préhension apte à guider l'introduction du rivet dans un outil de pose et une deuxième portion de préhension apte à transmettre un couple de torsion, les deux portions de préhension étant séparées par une portion de blocage apte à limiter un mouvement axial du rivet dans un outil de pose.

Un tel rivet peut être saisi et maintenu fermement par un nez de pose de sorte que son axe soit quasiment coaxial avec l'axe du nez de pose.

Le dispositif selon l'invention présente également de préférence au moins une des caractéristiques ci-dessous :
- la portion de blocage est cylindrique et est reliée à chaque portion de préhension par une portion rayonnée,
- la douille comprend deux éléments soudés,
- la douille comprend une zone de formation de bulbe présentant une résistance élastique inférieure à la résistance élastique du reste de la douille,
- la douille comprend au moins une gorge de compression réalisée sur une portion extérieure du fût tubulaire de la douille, entre la collerette et la zone de formation du bulbe,
- la transmission de couple s'effectue au moyen de cannelures, de surfaces polygonales, ou d'une surface cylindrique.
- la première portion de préhension comporte un chanfrein,
- la douille comporte une portion d'extrémité opposée à la collerette, de diamètre extérieur inférieur au diamètre extérieur du fût.

L'invention concerne également un nez de pose pour installer un rivet aveugle. Le nez de pose comprend un corps cylindrique présentant une face avant percée, un fourreau tubulaire disposé à l'intérieur du corps, un embout disposé à l'intérieur du fourreau et définissant un passage intérieur. L'embout comprend deux portions de réception de l'élément de préhension du rivet de formes complémentaires desdites portions de préhension, dont au moins une des portions de réception est apte à transmettre un couple de torsion. Lesdites portions de réception sont séparées axialement par une portion médiane comportant au moins un élément mobile radialement dans le passage intérieur, apte à limiter un mouvement axial du rivet. Un tel nez de pose permet de maintenir un rivet fermement coaxial avec l'axe du nez de pose. Il permet également d'effectuer un effort de traction élevé au rivet et d'appliquer un couple de rotation sur ce même rivet.

Le nez de pose selon l'invention présente également de préférence au moins une des caractéristiques ci-dessous :
- la transmission du couple s'effectue au moyen de cannelures, de surfaces polygonales ou d'une cage à galets,
- la portion médiane comprend au moins un logement dans lequel est logé l'élément mobile radialement,
- un moyen élastique comprime radialement l'élément mobile vers l'intérieur de l'embout.
- l'embout est mobile axialement et en rotation à l'intérieur du fourreau.

L'invention concerne également un procédé d'installation d'un rivet aveugle selon l'invention au moyen d'un nez de pose selon l'invention, comprenant une première étape d'engagement du nez de pose avec l'élément de préhension de la vis, une deuxième étape de traction axiale sur l'élément de préhension et formation d'un bulbe sur la douille, d'une troisième étape de vissage de la vis dans la douille et rupture de l'élément de préhension de la vis au niveau de la gorge de rupture. Pendant l'étape d'engagement du nez de pose avec l'élément de préhension de la vis, un élément mobile radialement limite un mouvement axial du rivet dans le nez de pose.

Selon une autre caractéristique du procédé d'installation selon l'invention, pendant les étapes de formation du bulbe, de vissage de la vis et de rupture de l'élément de préhension, les portions de préhension de la vis sont contenues dans les portions de réception de l'embout, la portion de blocage de la vis est en butée contre l'élément mobile, et l'embout est contenu à l'intérieur du fourreau de sorte à interdire tout déplacement radial de l'élément mobile.

D'autres buts, caractéristiques et avantages de l'invention apparaîtront à la description d'exemples de modes de réalisation de l'invention, description faite en liaison avec les dessins dans lesquels:
- la figure 1 est une vue isométrique d'un rivet selon un premier mode de réalisation de l'invention, dans un état non installé,
- la figure 2 est une vue en coupe d'un rivet selon un premier mode de réalisation de l'invention, dans un état non installé,
- la figure 3 est une vue en coupe d'un rivet selon un premier mode de réalisation de l'invention, dans un état installé,
- la figure 4 est une vue d'un rivet selon un deuxième mode de réalisation de l'invention dans un état non installé, comprenant une douille formée de deux éléments de douille soudés,
- la figure 5 est une vue d'un rivet selon un troisième mode de réalisation de l'invention dans un état non installé, comprenant des gorges réalisées dans une portion extérieure de la douille,
- la figure 6 est une vue d'un rivet selon un quatrième mode de réalisation de l'invention dans un état non installé, comprenant des portions de préhensions de formes différentes,
- la figure 7A est une vue en coupe d'un nez de pose d'un rivet selon un premier mode de réalisation de l'invention,
- la figure 7B est une vue en coupe d'un nez de pose selon un deuxième mode de réalisation,
- la figure 7C est une vue isométrique d'un ressort périmétrique utilisé dans le nez de pose de la figure 7B,
- la figure 7D est une coupe selon l'axe 7D-7D de la figure 7B,
- les figures 8 à 15 sont des vues en coupe d'un rivet des figures 1 à 3, et de l'outil de pose de la figure 7A illustrant les différentes étapes de pose du rivet.

Pour faciliter la lecture des dessins, seuls les éléments nécessaires à la compréhension de l'invention ont été représentés. Les mêmes éléments portent les mêmes références d'un dessin à l'autre.

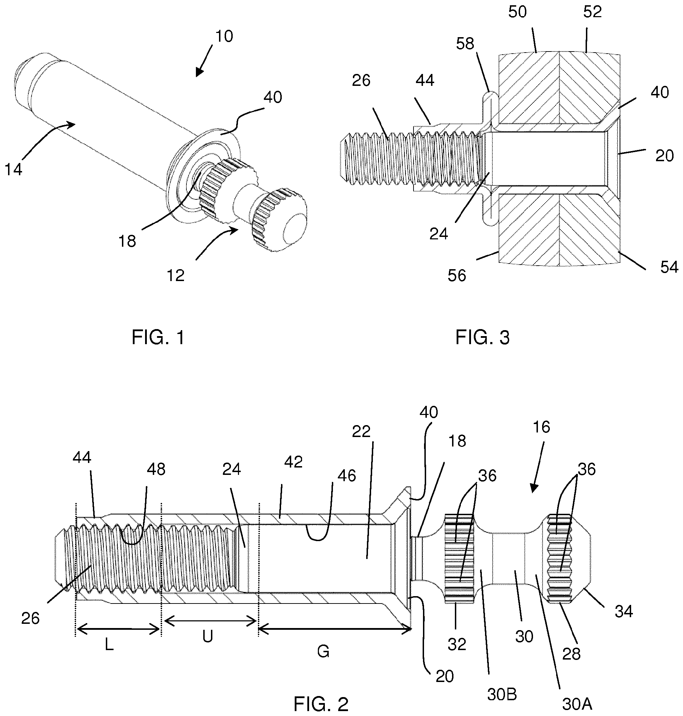

En référence aux figures 1 à 3, un rivet 10 selon un mode de réalisation de l'invention comprend une vis 12 et une douille 14. La vis 12 comprend un élément de préhension 16 apte à être cassé lors de l'installation du rivet, une gorge de rupture 18, une tête 20 fraisée, un fût cylindrique lisse 22, une portion de transition 24 et une portion filetée 26. La portion de transition 24 permet de raccorder le fût cylindrique 22 à la portion filetée 26, de diamètre maximal inférieur au diamètre du fût cylindrique 22. La portion de transition 24 est ici représentée sous une forme bombée, mais peut prendre une forme conique.

L'élément de préhension 16 comprend une première portion 28 de préhension, une portion de blocage 30 et une deuxième portion 32 de préhension. La première portion 28 de préhension présente à son extrémité libre un chanfrein 34 qui facilite le centrage et l'introduction de l'élément de préhension 16 dans un nez de pose. Dans cet exemple, chaque portion de préhension 28, 32 comprend des moyens de transmission de couple sous la forme de vingt-quatre cannelures 36. Ces cannelures sont disposées axialement sur une partie cylindrique du pourtour extérieur de chaque portion 28, 32 de préhension, régulièrement réparties et alignées axialement entre elles. Les deux portions de préhension 28, 32 ont une fonction de centrage de la fixation dans un nez de pose et de transmission de couple entre le nez de pose et la fixation. L'utilisation d'un grand nombre de cannelures sur la première portion 28 associée au chanfrein 34 aide au crabotage automatique.

Le centrage effectué par le système de doubles cannelures permet d'ajuster l'axe du rivet 10 avec l'axe du nez de pose, qui est lui-même ajusté par le robot à l'axe du perçage dans la structure à assembler. Ainsi, un tel élément de préhension 16 permet à un robot d'introduire le rivet 10 dans un perçage sans interférence et sans dommage sur la structure. Sans un tel alignement d'axes, l'introduction par un robot du rivet dans un perçage de la structure à assembler serait impossible.

La gorge de rupture 18 est dimensionnée de sorte à présenter le plus petit diamètre de la vis 12, capable de soutenir une contrainte en traction d'installation donnée, et cassant sous une contrainte de torsion donnée.

La portion de blocage 30 comprend une partie médiane cylindrique lisse et deux portions rayonnées concaves 30A et 30B, reliées respectivement aux portions de préhension 28, 32. Le diamètre de la partie cylindrique lisse de la portion de blocage 30 est inférieur au diamètre des portions de préhension 28, 32, mais supérieur au plus petit diamètre de la gorge de rupture 18. La section de la portion de blocage est ainsi plus grande que la section de la gorge de rupture. Les portions rayonnées 30A, 30B assurent la butée de l'élément de préhension dans la direction axiale dans un outil de pose, bloquant tout mouvement axial dudit rivet pendant sa pose.

La longueur du fût lisse 22 est choisie en fonction d'une plage d'épaisseur de structures à assembler, variant entre une épaisseur minimale et une épaisseur maximale.

La vis 12 est insérée avec jeu dans une douille 14 qui comprend une collerette 40 élargie apte à recevoir la tête 20 fraisée de la vis, et un fût tubulaire 42. Avant installation du rivet 10 dans une structure, la surface extérieure de la portion tubulaire 42 est cylindrique, et présente à son extrémité opposée à la collerette 40 une portion cylindrique 44 de diamètre extérieur réduit, permettant de faciliter l'insertion du rivet 10 dans un perçage. Cette portion amincie 44 est facultative, et la douille peut avoir un diamètre extérieur constant sur toute la longueur du la portion tubulaire 42.

Le fût tubulaire 42 présente une surface intérieure 46 cylindrique lisse et une surface intérieure taraudée 48, disposée à l'extrémité de la douille 14, opposée à la collerette 40. Le filetage de la vis 12 et le taraudage de la douille 14 sont complémentaires. Ce sont par exemple des filets conformes à la norme AS8879, couramment utilisée pour les fixations aéronautiques.

La longueur totale de la douille 14 est divisée en trois zones successives et adjacentes assurant des fonctions distinctes. Une première zone G dite zone de serrage comprend la collerette 40 et une portion de fût 42 tubulaire dont la surface intérieure 46 est lisse, correspondant à l'épaisseur minimale de structure à assembler.

Une deuxième zone U de déformation s'étend sur le reste du fût 42 tubulaire ayant une surface intérieure 46 lisse. Cette zone U recouvre, quand le rivet 10 n'est pas installé, la portion restante de fût lisse 22 de la vis, la zone de transition 24 et une portion de filetage 26. La zone U de douille est destinée à être déformée pour former un bulbe qui s'appuiera sur le côté aveugle des structures à assembler. Pour faciliter la formation du bulbe, la zone U peut être recuite annulairement, par exemple au moyen d'une machine à induction, ou comprendre un épaulement (non figuré) sur une portion de la surface intérieure 46 lisse de la douille, diminuant sur la longueur de cette zone l'épaisseur de la douille.

La troisième zone L de douille s'étend sur toute la portion de fût 42 tubulaire taraudée. Sa fonction est d'empêcher tout mouvement de translation entre la douille et l'extrémité de la vis et de permettre le vissage de la vis dans la douille. Lorsque le rivet n'est pas installé, cette zone L est au contact d'une portion terminale de filetage 26 de la vis 12.

La figure 3 montre le rivet 10 des figures 1 et 2 dans un état installé dans deux structures 50, 52 à assembler. L'élément de préhension 16 a été cassé au niveau de la gorge de rupture 18, de sorte qu'il ne reste que la tête 20 de la vis et la collerette 40 de la douille, formant ensemble la tête du rivet, noyée dans une fraisure préalablement réalisée dans une face accessible 54 de la structure 50. La première zone G de la douille 14 est entièrement noyée dans les structures 50, 52. La deuxième zone U de la douille est déformée et comprend un bulbe 58 dont une face est au contact du côté aveugle 56 de la structure 52, opposé au côté accessible 54. La tension installée entre la tête du rivet 20, 40 et le bulbe 58 permet de maintenir les structures 50, 52 assemblées. La troisième zone L de douille recouvre en position installée une portion de filetage 26 de la vis adjacente à la portion de transition 24.

La vis est par exemple en alliage de titane Ti6Al4V, revêtue d'une couche de lubrifiant et la douille est par exemple en acier A286 passivé. Dans la deuxième zone U recuite, la résistance est d'environ 600 MPa, alors que la résistance des première et troisième zones G et L est d'environ 1200 MPa.

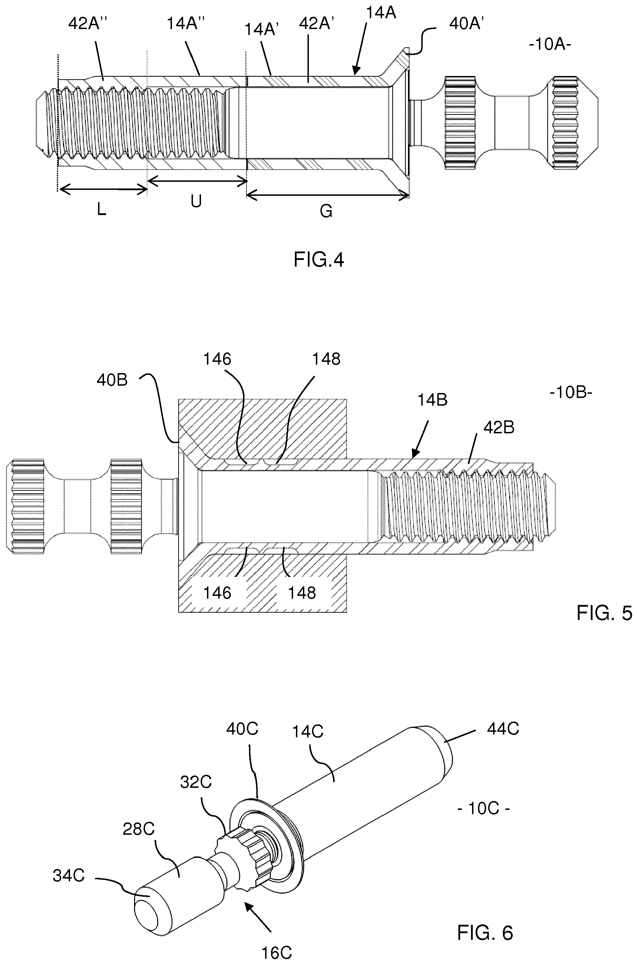

La figure 4 est une vue d'un rivet 10A selon un deuxième mode de réalisation de l'invention. Dans la figure 4, les éléments identiques à ceux des figures 1 à 3 conservent les mêmes références, les éléments différents comprennent la même référence à laquelle à été ajoutée la lettre « A ». La seule différence entre le rivet de la figure 4 et le rivet des figures 1 à 3 réside dans la douille 14A, qui est dans ce deuxième mode de réalisation formée de deux éléments 14A' et 14A", soudés l'un à l'autre.

Le premier élément de douille 14A' comprend une collerette 40A' élargie et une portion tubulaire 42A' de surface intérieure lisse et apte à recouvrir une portion de fût lisse 22 de la vis, correspondant à l'épaisseur minimum de structure à serrer. La longueur totale de ce premier élément de douille 14A' présente sensiblement la même longueur G que la première zone de la douille 14 du rivet décrit en relation avec les figures 1 à 3. L'élément de douille 14A' est par exemple en acier A286 écroui et vieilli, d'une résistance de 1200 MPa.

Le deuxième élément de douille 14A" comprend une portion tubulaire 42A" de longueur suffisante pour recouvrir la portion de fût lisse 22 restante, la portion de transition 24 et la majeure partie du filetage 26 de la vis. Ce deuxième élément présente une longueur égale à l'addition des longueurs des deuxièmes et troisièmes zones U et L de la douille 14 du rivet 10 décrit en relation avec les figures 1 à 3. De la même manière que décrit précédemment, le deuxième élément de douille 14A" est recuit localement ou amincie sur la deuxième zone L, de manière à présenter une résistance inférieure permettant la formation d'un bulbe. L'élément de douille 14A" est par exemple en acier inoxydable recuit, d'une résistance de 600 MPa maximum. D'autres matériaux ou traitements peuvent être utilisés.

Les deux éléments de douille 14A' et 14A" sont soudés par exemple au moyen d'une soudure laser, par faisceau d'électrons ou par friction.

L'avantage d'utiliser deux éléments de douille est de faciliter la fabrication de la douille 14A, par exemple en réduisant les longueurs intérieures à usiner et les difficultés associées pour obtenir des tolérances serrées, sans augmenter significativement le coût. Un deuxième avantage est de pouvoir fabriquer industriellement et donc à moindre coût un grand nombre de deuxièmes éléments 14A" de longueurs identiques, et de les souder à des premiers éléments 14A' de différentes longueurs - de même diamètre - puisque devant s'adapter à des épaisseurs de structures à serrer différentes.

La figure 5 est une vue d'un rivet 10B selon un troisième mode de réalisation de l'invention. Dans la figure 5, les éléments identiques à ceux des figures 1 à 3 conservent les mêmes références, les éléments différents comprennent la même référence à laquelle a été ajoutée la lettre « B ». La seule différence entre le rivet de la figure 5 et le rivet des figures précédentes est que la douille 14B comprend deux gorges annulaires 146 et 148 réalisées sur la surface extérieure de la portion tubulaire 42B lisse de la douille 14B, disposées sur la première zone G, entre la collerette 40B élargie et la deuxième zone U de formation du bulbe.

Du fait de leur disposition sur une zone de la douille en contact avec la paroi interne d'un perçage de la structure, les gorges annulaires 146 et 148 se compriment entre la douille 14B et la structure, lorsqu'un effort de traction est imprimé sur la vis pour former un bulbe. Les gorges permettent ainsi lors de leur compression de compenser les variations de forme et de dimension du bulbe dues aux différentes épaisseurs que peut serrer un rivet 10B d'une longueur donnée. En particulier, les gorges permettent d'assurer la formation d'un bulbe unique de diamètre satisfaisant systématiquement au contact de la face aveugle des structures à assembler quelle que soit l'épaisseur à serrer, sur toute la plage de serrage de la fixation. Le nombre de gorges, leur forme et leur profondeur peut varier sur la longueur de la première zone G, en fonction de la longueur de la zone G, de l'épaisseur de la douille et de son diamètre extérieur.

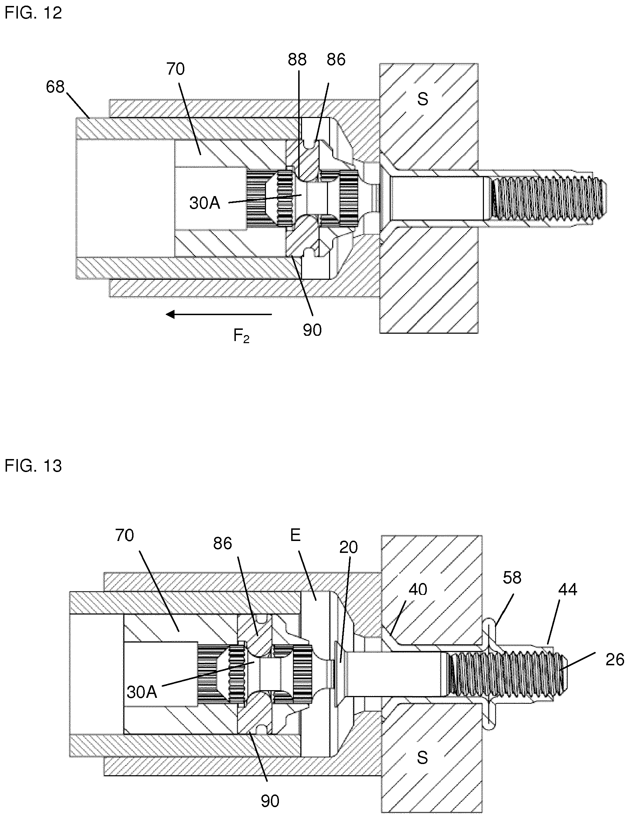

La figure 6 est une vue d'un rivet 10C selon un quatrième mode de réalisation de l'invention. Dans ce mode de réalisation, la première portion 28C de préhension 16C est un cylindre et comporte un chanfrein 34C ayant la même fonction que le chanfrein 34 du rivet 10. La deuxième portion 32C de préhension comporte des surfaces polygonales 36C réparties sur tout le pourtour. Dans cet exemple, la première portion 28C de préhension a une fonction de centrage et de guidage de l'élément de préhension dans un outillage de pose, tandis que la deuxième portion 32C de préhension a une fonction de transmission de couple entre l'outillage de pose et le rivet 10C. Le diamètre de la première portion 28C de préhension est ici inférieur ou égal au diamètre maximal de la deuxième portion 32C de préhension. La longueur de la première portion de préhension 28C dans la direction axiale est supérieure à la longueur de la deuxième portion de préhension 32C, notamment pour diminuer le battement angulaire en extrémité de rivet, du fait d'une augmentation de surface de contact entre l'outil de pose et la deuxième portion. Cette configuration, représentée en figure 12, permet d'aligner les axes du rivet et du nez de pose avec une très bonne précision, de l'ordre du degré. La portion de blocage 30C est identique à la portion de blocage du rivet 10 et assure la même fonction de butée en translation du rivet 10C dans un outil de pose. La douille 14C comprend à l'extrémité opposée à la collerette un chanfrein 44C, qui permet de faciliter l'insertion du rivet dans un perçage, et rattraper un faible jeu angulaire entre l'axe A du rivet 10C et l'axe du nez de pose.

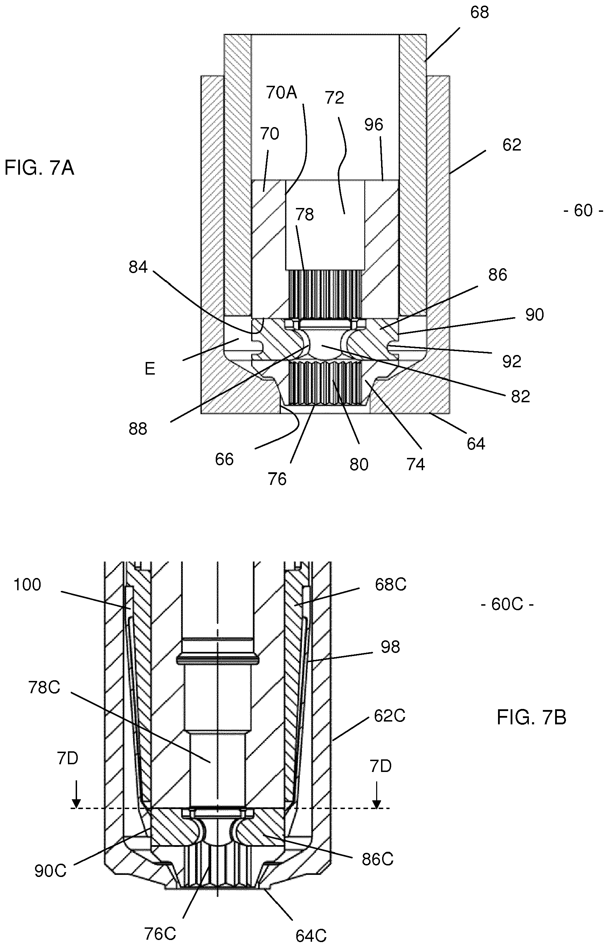

La figure 7A est une vue en coupe du nez de pose 60 adaptable sur un outil de pose, apte à poser un rivet 10, 10A ou 10B décrit précédemment. Le nez de pose 60 comprend un corps 62 cylindrique creux présentant une face avant 64 destinée à venir en contact avec le côté accessible d'une structure. La face avant 64 est percée en son centre d'une ouverture 66 de diamètre suffisant pour permettre le passage de l'élément de préhension 16 et de la tête 20 de la vis 12. Le corps 62 cylindrique reçoit en son sein un fourreau 68 creux, cylindrique et fixe. Le fourreau 68 est disposé dans le corps 62 de sorte à ménager un espace annulaire E intérieur à l'extrémité avant du corps 62, proche de la face avant 64.

Un embout 70 est disposé à l'intérieur du fourreau 68, apte à se déplacer axialement et en rotation dans le fourreau 68. L'embout 70 comprend une paroi intérieure 70A délimitant un passage 72 s'étendant axialement sur toute la longueur de l'embout. L'embout 70 comprend une extrémité avant 74, dont la surface extérieure tronconique se loge dans l'ouverture 66 du corps. La surface intérieure de l'extrémité avant 74, formant une extrémité avant du passage 72, comprend une première portion de réception 76 présentant des surfaces d'entraînement 80 complémentaires des cannelures 36 des portions de préhension 28, 32 de la vis. L'embout 70 comprend une deuxième portion de réception 78 dans le passage 72, disposée axialement à distance de la première portion 76. La deuxième portion de réception 78 comprend également des surfaces d'entraînement 80 complémentaires des cannelures 36 de la première portion de préhension 28 de la vis. Dans cet exemple, les surfaces d'entrainement 80 sont constituées de vingt-quatre cannelures axiales, réalisées sur la surface intérieure de la paroi 70A de l'embout. Les cannelures sont continues depuis l'extrémité avant de l'embout 70 jusqu'à l'extrémité arrière opposée. Elles sont régulièrement réparties sur la surface intérieure de la paroi 70A, et correspondent à la disposition et au nombre de cannelures 36 de l'élément de préhension de la vis. Les dimensions radiales des cannelures du nez de pose correspondent aux dimensions radiales des cannelures de la vis au jeu près pour permettre les mouvements de translation dans la direction axiale entre la vis et l'embout.

Les deux portions de réception 76, 78 sont séparées par une portion 82 médiane dans laquelle quatre logements 84 sont réalisés radialement dans toute l'épaisseur de la paroi de l'embout 70, débouchant dans le passage 72. Dans chaque logement 84 est disposé un élément 86, mobile dans la direction radiale. Les éléments mobiles 86 sont typiquement en acier de dureté élevée. Ils comprennent une surface intérieure 88 de forme torique, complémentaire de la portion de blocage 30 de l'élément de préhension 16 de la vis, et une surface extérieure 90 cylindrique, apte à coulisser dans le fourreau 68. Un moyen élastique (non figuré) est disposé annulairement dans une rainure 92 réalisée sur la surface extérieure des éléments mobiles et de la surface extérieure de l'embout. Le moyen élastique tend à comprimer radialement les éléments mobiles vers l'intérieur de l'embout 70, dans le passage intérieur 72. Les éléments mobiles permettent de faire varier le diamètre intérieur de la portion 82 médiane, selon la position radiale qu'ils adoptent. En position de repos ou d'écartement nul, les éléments mobiles 86 débouchent dans le passage 72. Le diamètre intérieur de la portion médiane 82 est alors inférieur au plus petit diamètre des portions de réception 76, 78. Ce diamètre intérieur correspond au diamètre extérieur de la portion cylindrique de la portion de blocage 30 de la vis 16. En position d'écartement maximal, les éléments mobiles sont repoussés à l'intérieur des logements 84 vers l'extérieur de l'embout 70, de sorte que le diamètre intérieur de la portion médiane est au moins égal au plus grand diamètre des portions de réception 76, 78.

La paroi intérieure 70A entre la deuxième portion de réception 78 et son extrémité arrière 96 est lisse et de diamètre au moins égal au plus grand diamètre des portions de réception 76, 78 afin de permettre l'évacuation de l'élément de préhension 16 une fois cassé.

D'une manière générale, le nez de pose comprend sur la première portion de réception 76 une surface de forme apte à recevoir les portions de préhension 28, 32 de la vis 12, puisque ces deux portions coulissent à l'intérieur de la première portion 76 de l'outil de pose. Le nez de pose 60 comprend sur la deuxième portion de réception 78 une surface de forme complémentaire de la première portion 28 de l'élément de préhension 16 de la vis, qui se loge entièrement dans cette portion de réception.

La figure 7B montre un nez de pose 60C adapté pour installer un rivet 10C, comprenant un corps 62C, un fourreau 68C tronconique et un embout 70C cylindrique. Le nez 60C comprend une première portion de réception 76C comprenant douze dents équivalentes aux douze dents de la deuxième portion 34C de préhension du rivet 10C. Le nez comprend également une deuxième portion de réception 78C de surface intérieure cylindrique lisse, de diamètre intérieur identique au jeu près au diamètre extérieur de la première portion de préhension 28C du rivet 10C. Dans cet exemple, les éléments mobiles 86C ont une surface extérieure 90C cylindrique sans rainure, et sont maintenus en place par un moyen élastique 98 s'étendant entre la surface extérieure du fourreau 68C et la surface intérieure du corps 62C.

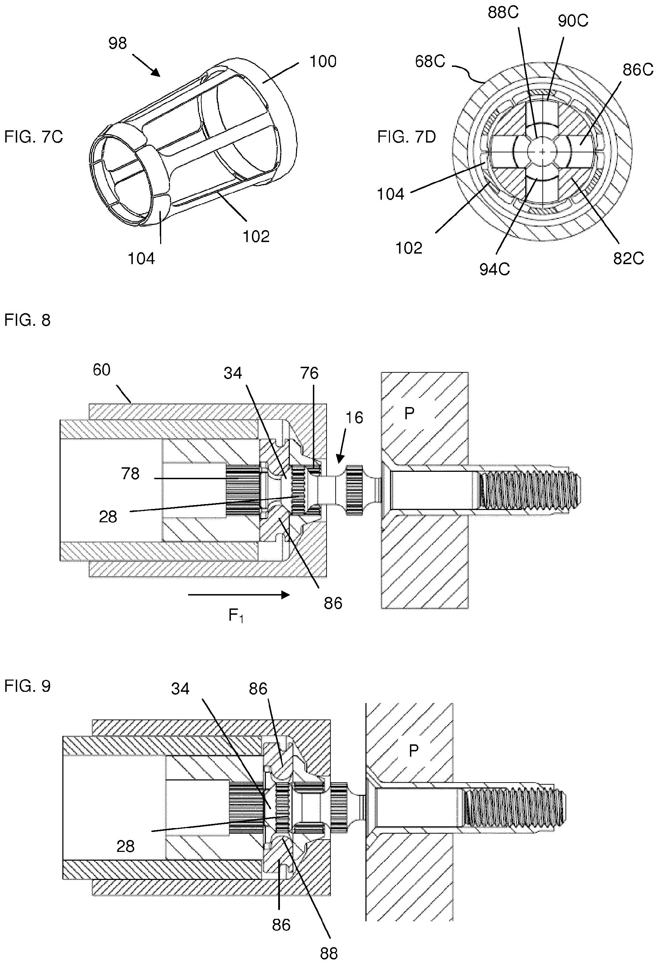

La figure 7C est une vue isométrique du ressort périmétrique 98 visible sur la figure 7B. Le ressort 98 comprend une extrémité 100 circulaire dont le diamètre intérieur s'ajuste sans jeu sur la surface extérieure du fourreau 68C. De l'extrémité 100 s'étendent six bras flexibles 102 régulièrement répartis. Chaque bras flexible se termine à une extrémité opposée à celle de l'extrémité circulaire par une portion d'extrémité 104 en arc couvrant une surface angulaire de 60°. En position de repos, l'ensemble des six portions d'extrémité 104 forment une extrémité circulaire de diamètre intérieur inférieur au diamètre extérieur de la portion médiane 82C. Dans cet exemple, le ressort 98 est monté sur le fourreau 68C de sorte que chaque portion en arc 104 possède une partie en appui sur la partie médiane 82C et sur un élément mobile 86C (figure 7D). Ainsi, lorsqu'un élément mobile 86C se déplace radialement vers l'extérieur, seule une partie de chaque portion d'extrémité 104 perçoit un effort radial. Un tel ressort 98 est en acier traité et trempé est nettement plus résistant qu'un élastique en caoutchouc et assure un grand nombre de cycles d'installation sans nécessiter de maintenance. Ce ressort ne s'ovalise pas - au contraire d'un ressort avec une ou plusieurs spires - et peut exercer un effort de compression sur les éléments mobiles 86 dans un espace annulaire très restreint.

Le procédé de pose d'un rivet 10 décrit en relation avec les figures 1 à 3 dans une structure S est illustré dans les figures 8 à 15. Par souci de simplification une seule structure S est représentée, mais il est entendu que cette structure est composée de plusieurs sous-éléments de structure à assembler.

Par ailleurs, le procédé de pose décrit ci-après est exactement le même pour poser un rivet 10A, 10B ou 10C décrit précédemment.

Le rivet 10 dans un état non-installé est par exemple disposé dans une panoplie P et saisi par un robot muni d'un nez de pose 60 précédemment décrit. Comme illustré par la figure 8, le nez de pose 60 est avancé en direction de l'élément de préhension 16 de la vis (flèche F₁) jusqu'à entrer en contact avec lui. Guidées par le chanfrein 34 de l'élément de préhension, les cannelures 36 de la première portion de préhension 28 pénètrent axialement dans les cannelures 80 de la première portion de réception 76 du nez de pose 60. Le chanfrein 34 repousse radialement vers l'extérieur les éléments mobiles 86 mobiles au fur et à mesure que le nez de pose s'approche de la panoplie et que l'élément de préhension 16 du rivet avance dans l'embout 70.

L'écartement des éléments mobiles est maximum quand la première portion de préhension 28 est disposée entre les deux portions de réception 76, 78 du nez de pose, comme illustré par la figure 9.

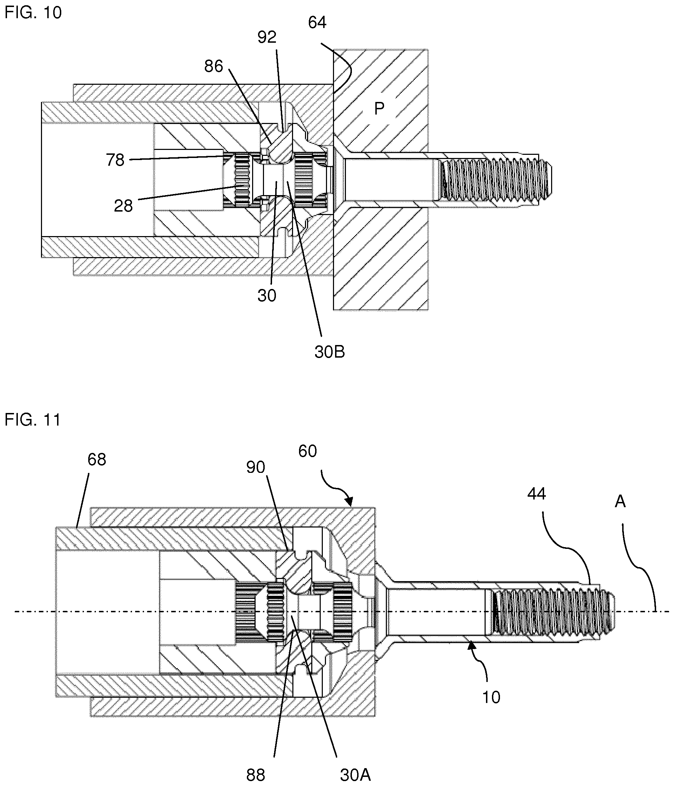

Quand la première portion 28 de préhension entre dans la deuxième portion de réception 78 de l'outil (figure 10), les éléments mobiles reviennent radialement vers l'intérieur pour venir au contact de la portion de blocage 30 du rivet 10 sous l'effet de l'anneau élastique logé dans la rainure 92. L'élément de préhension 16 de vis est alors entièrement contenu dans le nez de pose 60. Dans cette position, la première portion de préhension 28 est insérée dans la deuxième portion de réception 78 du nez de pose, la portion de blocage 30 est maintenue par les surfaces intérieures 88 des éléments mobiles et la deuxième portion de préhension 32 est insérée dans la première portion de réception 76 du nez de pose. L'embout 70 est ensuite reculé de sorte que éléments mobiles viennent en butée contre la portion rayonnée 30A. Le fourreau 68 étant immobile à l'intérieur du corps 62, la surface extérieure 90 cylindrique des éléments mobiles coulisse peu à peu dans le fourreau 68. Les éléments mobiles 86 ne peuvent donc plus se déplacer dans la direction radiale (figures 10 et 11). En traction, la course des éléments mobiles est limitée par la portion rayonnée 30A de la portion de blocage.

L'élément de préhension 16 de la vis est bloqué dans l'embout en rotation du fait de l'engagement des surfaces complémentaires de l'élément de préhension de la vis et des portions de réception aptes à transmettre un couple, et en translation du fait de l'engagement des éléments mobiles et de la portion de blocage de la vis.

Le centrage associé au blocage du mouvement du rivet dans l'outil de pose assure un maintien avec un jeu angulaire en extrémité 44 du rivet minimal, tel que l'axe du rivet est sensiblement coaxial à l'axe du nez de pose. Comme illustré par la figure 11, l'axe du rivet 10 et l'axe de l'embout 70 sont confondus, ou sensiblement confondus, avec un jeu angulaire inférieur à quelques degrés. Le robot peut ensuite se placer en face d'un perçage réalisé dans une structure S, et s'aligner par exemple par reconnaissance optique. Ainsi, le rivet 10 est sensiblement aligné avec l'axe du perçage.

Le rivet 10 est alors disposé par le robot au travers du perçage par le côté accessible, le diamètre réduit 44 en extrémité de fixation (ou le chanfrein 44C pour le rivet 10C) aidant au centrage et guidage du rivet dans le perçage. Le perçage comprend ici une fraisure, apte à recevoir la tête du rivet, comprenant la collerette de la douille 40 et la tête 20 de la vis. Lorsque la tête du rivet est en contact avec la fraisure, l'extrémité filetée 26 ressort de la structure du côté aveugle. Dans cette position représentée en figure 12, l'élément de préhension 16 de vis est entièrement contenu dans le nez de pose 60 et la face avant 64 est en appui contre la collerette 40 de la douille et la face accessible de la structure S.

La première étape de l'installation du rivet 10 consiste à former un bulbe. Pour cela, l'embout 70 effectue un mouvement axial dans la direction opposée à la structure - dans la direction de la flèche F₂ - à l'intérieur du corps 62. Lors de ce déplacement, la surface extérieure 90 des éléments mobiles 86 coulisse dans le fourreau 68 jusqu'à ce que les éléments mobiles soient complètement prisonniers de l'embout 70. Ainsi, la gorge de blocage 30 de la vis est fermement tenue par les éléments mobiles 86, qui limitent le mouvement axial du rivet. Sur la figure 12, l'embout 70 tire sur l'élément de préhension 16 de vis 12, la collerette 40 de la douille 14 étant maintenue dans la structure par la face avant 64, immobile.

L'embout 70 continue de se déplacer axialement, entraînant la portion filetée 26 de la vis et le taraudage 48 de la douille vers la face aveugle de la structure S, jusqu'à la formation d'un bulbe 58 dont une face vient en appui contre la face aveugle (figure 13). La tête 20 de la vis 12 est alors contenue dans l'espace annulaire E du nez de pose.

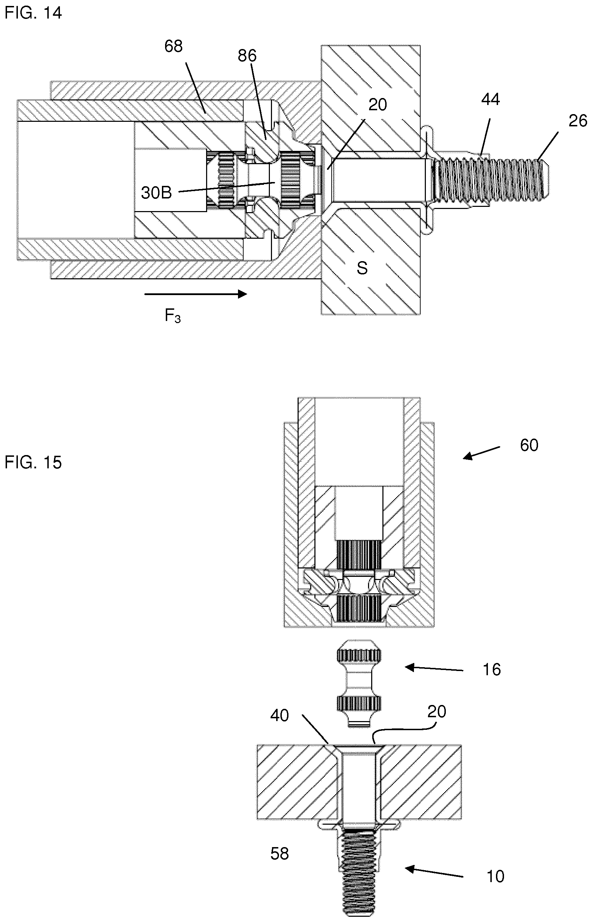

La deuxième étape consiste à visser la vis 12 dans la douille 14 pour ramener la tête 20 de la vis dans la collerette 40 de la douille. La traction exercée sur l'embout 70 est stoppée et un mouvement de rotation est imprimé à l'embout, ce dernier étant maintenant libre de se déplacer en translation en direction de la structure (flèche F₃ sur la figure 14). La figure 14 illustre la fin de ce mouvement : l'embout 70 est revenu à sa place initiale dans le fourreau 68 de sorte que les éléments mobiles 86 sont de nouveau libres de se déplacer radialement, dans la limite de contrainte du moyen élastique. Les éléments mobiles sont en butée contre la deuxième portion rayonnée 30B de la zone de blocage. La tête 20 de la vis est en appui dans la collerette 40 de la douille. La portion filetée 26 de la vis ressort largement de la portion 44 amincie de la douille 14.

La troisième étape consiste à finaliser l'installation du rivet en cassant l'élément de préhension 16 de la vis. Une fois la tête 20 de la vis en appui dans la collerette 40 de la douille, l'embout 70 continue de tourner. Le couple de torsion est transmis à la vis par le biais des deux portions de préhension 30, 32 de la vis. La gorge de rupture 18 est conçue pour casser au-delà d'un certain couple de torsion. Elle casse donc une fois le seuil atteint, laissant la tête 20 affleurante à la surface accessible de la structure S.

L'élément de préhension 16 une fois rompu est évacué par l'arrière ou par l'avant du nez de pose. La figure 15 montre en éclaté le nez de pose 60, l'élément de préhension 16 cassé et le rivet 10 installé dans la structure S.

Le nez de pose 60 est alors reculé afin de se déplacer à l'aplomb d'un autre rivet à saisir. La séquence d'installation peut recommencer.

Le rivet et le nez de pose selon l'invention ne sont pas limités structurellement aux seuls exemples décrits ci-avant. Par exemple, la tête du rivet peut être protubérante au lieu d'être fraisée. La ou les portions de préhension 30, 32, aptes à transmettre un couple de torsion peuvent comprendre douze dents, des faces polygonales ou tout autre moyen permettant de passer un couple de torsion. Ce peut être aussi une section circulaire. Dans ce cas le nez de pose comprend dans la portion de réception complémentaire un moyen circulaire de transmission du couple, comme une cage à galet.

Le rivet peut combiner plusieurs modes de réalisation décrits précédemment. Par exemple, la douille 14 peut comprendre deux éléments 14A', 14A" de douille soudés et des gorges de compression 146, 148 sur la surface extérieure du premier élément 14A'. En variante, la douille 14 peut comprendre un seul élément de douille et une gorge annulaire sur sa surface extérieure.

La portion de blocage 30 peut présenter différentes formes, du moment qu'elle permette de bloquer le mouvement du rivet dans l'outil de pose. Par exemple, la portion de blocage peut être cylindrique, de même diamètre extérieur que les portions de préhension adjacentes, et comporter une lumière circulaire ou oblongue traversante, apte à recevoir un élément mobile de l'outil de pose coulissant radialement.

Les logements 84 et les éléments mobiles 86 peuvent varier en nombre et en forme, complémentaires à la forme de la portion de blocage 30 du rivet. Les logements doivent permettre le mouvement radial des éléments mobiles 86 autour de l'élément de préhension 16 de vis lors de son insertion dans le nez de pose 60. Il peut n'y avoir qu'un seul logement dans lequel est logé un seul élément mobile, par exemple en forme de fourche à deux branches, apte à soutenir une portion de blocage de diamètre extérieur réduit des rivets 10, 10A, 10B ou 10C décrits, ou en forme d'axe coulissant radialement à travers une lumière. Les éléments mobiles 86 peuvent aussi être remplacés par des billes ou des éléments de forme conique.

Le fourreau intérieur 68 peut être remplacé par un épaulement annulaire réalisé sur la surface intérieure du corps 62, disposé sur une longueur suffisante pour bloquer les éléments mobiles 86 dans la direction radiale lors de la traction de la vis pour former le bulbe.

## Revendications

1. Rivet (10, 10A, 10B, 10C) comprenant une vis (12) comportant un élément de préhension (16), une gorge de rupture (18) conçue pour tenir sous une contrainte de tension et casser sous une contrainte en torsion, une tête (20) séparée de l'élément de préhension par la gorge de rupture, un fût lisse (22) et une portion filetée (26) ; une douille (14, 14A) comportant une collerette (40) apte à recevoir la tête (20), et un fût tubulaire (42, 42A, 42B) comprenant un taraudage (48) destiné à venir en prise avec la portion filetée (26) de la vis, **caractérisé en ce que** l'élément de préhension (16) de la vis comprend une première portion de préhension (28, 28C) apte à guider l'introduction du rivet dans un outil de pose et une deuxième portion de préhension (28C, 32C) apte à transmettre un couple de torsion, les deux portions de préhension étant séparées par une portion de blocage (30) apte à limiter un mouvement axial du rivet dans un outil de pose.

2. Rivet (10, 10A, 10B, 10C) selon la revendication 1 dans lequel la portion de blocage comprend une portion médiane cylindrique et est reliée à chaque portion de préhension par une portion rayonnée (30A, 30B).

3. Rivet (10A) selon la revendication 1 dans lequel la douille (14A) comprend deux éléments soudés (14A', 14A").

4. Rivet (10, 10A, 10B, 10C) selon la revendication 1 ou 3, dans lequel la douille comprend une zone (U) de formation de bulbe présentant une résistance élastique inférieure à la résistance élastique du reste de la douille.

5. Rivet (10B) selon l'une des revendications précédentes, dans lequel la douille comprend au moins une gorge de compression (146, 148) réalisée sur une portion extérieure du fût (42) tubulaire de la douille, entre la collerette (40) et la zone (U) de formation du bulbe (58).

6. Rivet (10, 10A, 10B, 10C) selon la revendication 1 dans lequel la transmission de couple s'effectue au moyen de cannelures, de surfaces polygonales, ou d'une surface cylindrique.

7. Rivet (10, 10A, 10B, 10C) selon la revendication 1 dans lequel la première portion de préhension (28, 28C) comporte un chanfrein (34, 34C).

8. Rivet (10, 10A, 10B, 10C) selon la revendication 1 dans lequel la douille comporte une portion d'extrémité (44, 44C) opposée à la collerette (40), de diamètre extérieur inférieur au diamètre extérieur du fût (42).

9. Nez de pose (60, 60C) pour installer un rivet (10, 10A, 10B, 10C) selon l'une des revendications précédentes, le nez de pose comprenant un corps cylindrique (62) présentant une face avant (64) percée, un fourreau (68) tubulaire disposé à l'intérieur du corps, un embout (70) disposé à l'intérieur du fourreau et définissant un passage (72) intérieur, **caractérisé en ce que** l'embout (70) comprend deux portions de réception (76, 78 ; 76C, 78C) de l'élément de préhension (16) du rivet de formes complémentaires desdites portions de préhension (30), au moins l'une des portions de réception étant apte à transmettre un couple de torsion, lesdites portions de réception étant séparées axialement par une portion médiane (82) comportant au moins un élément mobile (86) radialement dans le passage intérieur, apte à limiter un mouvement axial du rivet.

10. Nez de pose (60) selon la revendication 9, dans lequel la transmission du couple s'effectue au moyen de cannelures (90), de surfaces polygonales ou d'une cage à galets.

11. Nez de pose (60) selon la revendication 9, dans lequel la portion médiane (82) comprend au moins un logement (84) dans lequel est logé l'élément (86) mobile radialement.

12. Nez de pose (60) selon la revendication 9, dans lequel un moyen élastique (98) comprime radialement l'élément mobile (86) vers l'intérieur de l'embout.

13. Nez de pose (60) selon la revendication 9, dans lequel l'embout (70) est mobile axialement et en rotation à l'intérieur du fourreau (68).

14. Procédé d'installation d'un rivet (10, 10A, 10B, 10C) selon l'une des revendications 1 à 8, au moyen d'un nez de pose (60, 60C) selon l'une des revendications 9 à 13, caractérisé en que le procédé comporte les étapes de :
- Engagement du nez de pose avec l'élément de préhension (16) de la vis,
- Traction axiale sur l'élément de préhension (16) et formation d'un bulbe (58) sur la douille (14, 14A, 14B),
- Vissage de la vis (12) dans la douille et rupture de l'élément de préhension de la vis au niveau de la gorge de rupture (18),
**caractérisé en ce que** pendant l'étape d'engagement du nez de pose avec l'élément de préhension (16) de la vis, un élément mobile (86) radialement limite un mouvement axial du rivet dans le nez de pose.

15. Procédé d'installation selon la revendication 14, **caractérisé en ce que** pendant les étapes de formation du bulbe, de vissage de la vis et de rupture de l'élément de préhension, les portions de préhension (28, 32 ; 28C, 32C) de la vis sont contenues dans les portions de réception de l'embout (70, 70C), la portion de blocage (30) de la vis est en butée contre l'élément mobile (86), et l'embout (70, 70C) est contenu à l'intérieur du fourreau (68, 68C) de sorte à interdire tout déplacement radial de l'élément mobile (86).

## Patentansprüche

1. Niete (10, 10A, 10B, 10C), umfassend eine Schraube (12), die ein Greifelement (16), eine Brechnut (18), die ausgelegt ist, um einen Kopf (20), der von dem Greifelement durch die Brechnut getrennt ist, unter einer Zugspannung zu halten und unter einer Torsionsspannung zu brechen, einen glatten Schaft (22) und einen Gewindeabschnitt (26) aufweist, eine Hülse (14, 14A), die einen Kragen (40) aufweist, der geeignet ist, den Kopf (20) aufzunehmen, und einen röhrenförmigen Schaft (42, 42A, 42B), der ein Innengewinde (48) aufweist, das dazu bestimmt ist, mit dem Gewindeabschnitt (26) der Schraube in Eingriff zu kommen, **dadurch gekennzeichnet, dass** das Greifelement (16) der Schraube einen ersten Greifabschnitt (28, 28C), der geeignet ist, das Einführen der Niete in ein Werkzeug zum Anbringen zu führen, und einen zweiten Greifabschnitt (28C, 32C) aufweist, der geeignet ist, ein Torsionsmoment zu übertragen, wobei die zwei Greifabschnitte durch einen Blockierabschnitt (30) getrennt sind, der geeignet ist, eine Axialbewegung der Niete in einem Werkzeug zum Anbringen zu begrenzen.

2. Niete (10, 10A, 10B, 10C) nach Anspruch 1, wobei der Blockierabschnitt einen zylindrischen Mittelabschnitt aufweist und mit jedem Greifabschnitt durch einen strahlenförmig abgehenden Abschnitt (30A, 30B) verbunden ist.

3. Niete (10A) nach Anspruch 1, wobei die Hülse (14A) zwei verschweißte Elemente (14A', 14A") aufweist.

4. Niete (10, 10A, 10B, 10C) nach Anspruch 1 oder 3, wobei die Hülse einen Bereich (U) zum Bilden des Wulstes aufweist, der einen elastischen Widerstand aufweist, der niedriger als der elastische Widerstand des Restes der Hülse ist.

5. Niete (10B) nach einem der vorhergehenden Ansprüche, wobei die Hülse mindestens eine Kompressionsnut (146, 148) aufweist, die auf einem äußeren Abschnitt des röhrenförmigen Schaftes (42) der Hülse zwischen dem Kragen (40) und dem Bereich (U) zum Bilden des Wulstes (58) erstellt ist.

6. Niete (10, 10A, 10B, 10C) nach Anspruch 1, wobei die Drehmomentübertragung durch Rillen, polygonale Flächen oder eine zylindrische Fläche erfolgt.

7. Niete (10, 10A, 10B, 10C) nach Anspruch 1, wobei der erste Greifabschnitt (28, 28C) eine Abschrägung (34, 34C) aufweist.

8. Niete (10, 10A, 10B, 10C) nach Anspruch 1, wobei die Hülse einen Endabschnitt (44, 44C), der dem Kragen (40) gegenüberliegt, von einem Außendurchmesser, der niedriger als der Außendurchmesser des Schaftes (42) ist, aufweist.

9. Anbringungsnase (60, 60C), um eine Niete (10, 10A, 10B, 10C) nach einem der vorhergehenden Ansprüche zu befestigen, wobei die Anbringungsnase einen zylindrischen Körper (62), der eine durchbohrte Vorderseite (64) aufweist, eine röhrenförmige Hülse (68), die im Inneren des Körpers angeordnet ist, ein Anschlussstück (70), das im Inneren der Hülse angeordnet ist und einen inneren Durchgang (72) definiert, aufweist, **dadurch gekennzeichnet, dass** das Anschlussstück (70) zwei Aufnahmeabschnitte (76, 78; 76C, 78C) des Greifelements (16) der Niete von komplementären Formen zu den Greifabschnitten (30) aufweist, wobei mindestens einer der Aufnahmeabschnitte geeignet ist, ein Torsionsmoment zu übertragen, wobei die Aufnahmeabschnitte durch einen mittleren Abschnitt (82) axial getrennt sind, der mindestens ein radial bewegliches Element (86) in dem inneren Durchgang aufweist, das geeignet ist, eine Axialbewegung der Niete zu begrenzen.

10. Anbringungsnase (60) nach Anspruch 9, wobei die Drehmomentübertragung durch Rillen (90), polygonale Flächen oder einen Rollenkäfig erfolgt.

11. Anbringungsnase (60) nach Anspruch 9, wobei der mittlere Abschnitt (82) mindestens ein Gehäuse (84) aufweist, in dem ein radial bewegliches Element (86) untergebracht ist.

12. Anbringungsnase (60) nach Anspruch 9, wobei ein elastisches Mittel (98) radial das bewegliche Element (86) in Richtung des Inneren des Anschlussstücks blockiert.

13. Anbringungsnase (60) nach Anspruch 9, wobei das Anschlussstück (70) im Inneren der Hülse (68) axial und drehbar beweglich ist.

14. Verfahren zum Befestigen einer Niete (10, 10A, 10B, 10C) nach einem der Ansprüche 1 bis 8 durch eine Anbringungsnase (60, 60C) nach einem der Ansprüche 9 bis 13, **dadurch gekennzeichnet, dass** das Verfahren die folgenden Schritte aufweist:
- Eingreifen der Anbringungsnase mit dem Greifelement (16) der Schraube,
- axiales Ziehen an dem Greifelement (16) und Bilden eines Wulstes (58) auf der Hülse (14, 14A, 14B),
- Schrauben der Schraube (12) in die Hülse und Brechen des Greifelements der Schraube an der Brechnut (18),
**dadurch gekennzeichnet, dass** bei dem Schritt des Eingreifens der Anbringungsnase mit dem Greifelement (16) der Schraube ein radial bewegliches Element (86) eine Axialbewegung der Niete in der Anbringungsnase begrenzt.

15. Verfahren zum Befestigen nach Anspruch 14, **dadurch gekennzeichnet, dass** während den Schritten des Bildens des Wulstes, des Schraubens der Schraube und des Brechens des Greifelements die Greifabschnitte (28, 32; 28C, 32C) der Schraube in den Aufnahmeabschnitten des Anschlussstücks (70, 70C) enthalten sind, der Blockierabschnitt (30) der Schraube in Anschlag gegen das bewegliche Element (86) ist und das Anschlussstück (70, 70C) im Inneren der Hülse (68, 68C) derart enthalten ist, um jegliche radiale Bewegung des beweglichen Elements (86) zu verhindern.

## Claims

1. Rivet (10, 10A, 10B, 10C) comprising a screw (12) with a handling element (16), a breaking groove (18) designed to hold under a tensile stress and break under a torsional stress, a head (20) separated from the handling element by the breaking groove, a smooth shank (22) and a threaded portion (26); a sleeve (14, 14A) comprising a collar (40) able to receive the head (20), and a tubular shank (42, 42A, 42B) comprising an internal thread (48) intended to come into engagement with the threaded portion (26) of the screw, **characterized in that** the handling element (16) of the screw comprises a first handling portion (28, 28C) able to guide the introduction of the rivet into a setting tool, and a second handling portion (28C, 32C) able to transmit a torque, the two handling portions being separated by a blocking portion (30) able to limit an axial motion of the rivet in a setting tool.

2. Rivet (10, 10A, 10B, 10C) according to Claim 1, wherein the blocking portion comprises a cylindrical median portion and is connected to each handling portion by a radiused portion (30A, 30B).

3. Rivet (10A) according to Claim 1, wherein the sleeve (14A) comprises two welded elements (14A', 14A'').

4. Rivet (10, 10A, 10B, 10C) according to Claim 1 or 3, wherein the sleeve comprises a zone (U) for bulb formation with an elastic strength less than the elastic strength of the rest of the sleeve.

5. Rivet (10B) according to any of the preceding claims, wherein the sleeve comprises at least one compression groove (146, 148) made on an outer portion of the tubular shank (42) of the sleeve, between the collar (40) and the zone (U) for formation of the bulb (58).

6. Rivet (10, 10A, 10B, 10C) according to Claim 1, wherein the torque is transmitted by means of splines, with polygonal faces or a cylindrical face.

7. Rivet (10, 10A, 10B, 10C) according to Claim 1, wherein the first handling portion (28, 28C) comprises a chamfer (34, 34C).

8. Rivet (10, 10A, 10B, 10C) according to Claim 1, wherein the sleeve comprises an end portion (44, 44C) opposite the collar (40), with outer diameter smaller than the outer diameter of the shank (42).

9. Setting nose (60, 60C) for installing a rivet (10, 10A, 10B, 10C) according to any of the preceding claims, the setting nose comprising a cylindrical body (62) with a pierced front face (64), a tubular sheath (68) arranged inside the body, a mouth piece (70) arranged inside the sheath and defining an inner passage (72), **characterized in that** the mouth piece (70) comprises two receiver portions (76, 78; 76C, 78C) for the handling element (16) of the rivet, with a form complementary to said handling portions (30), at least one of the receiver portions being able to transmit a torsion torque, said receiver portions 5 being axially separated by a median portion (82) comprising at least one element (86) movable radially in the inner passage and able to limit an axial motion of the rivet.

10. Setting nose (60) according to Claim 9, wherein the torque is transmitted by means of splines (90), by means of polygonal surfaces or by a roller cage.

11. Setting nose (60) according to Claim 9, wherein the median portion (82) comprises at least one housing (84) in which the radially movable element (86) is housed.

12. Setting nose (60) according to Claim 9, wherein an elastic means (98) radially compresses the movable element (86) towards the inside of the mouth piece.

13. Setting nose (60) according to Claim 9, wherein the mouth piece (70) is movable axially and in rotation inside the sheath (68).

14. Method for installation of a rivet (10, 10A, 10B, 10C) according to any of Claims 1 to 8, using a setting nose (60, 60C) according to any of Claims 9 to 13, **characterized in that** the method comprises the steps of:
- engagement of the setting nose with the handling element (16) of the screw,
- axial traction on the handling element (16) and formation of a bulb (58) on the sleeve (14, 14A, 14B),
- screwing of the screw (12) into the sleeve and breakage of the handling element of the screw at the level of the break groove (18),
**characterized in that** during the step of engagement of the setting nose with the handling element (16) of the screw, a radially movable element (86) limits an axial motion of the rivet in the setting nose.

15. Installation method according to Claim 14, **characterized in that** during the steps of bulb formation, screwing of the screw and breakage of the handling element, the handling portions (28, 32; 28C, 32C) of the screw are contained in the receiver portions of the mouth piece (70, 70C), the blocking portion (30) of the screw rests against the movable element (86), and the mouth piece (70, 70C) is contained inside the sheath (68, 68C) so as to prevent any radial movement of the movable element (86).
